# EUROPEAN PATENT APPLICATION

(11) **EP 4 592 711 A1**
(43) Date of publication of application: **30.07.2025**
(21) Application number: 23867949.2
(22) Date of filing: 22.08.2023
(51) Int. Cl.: G01S 17/10, G01C 3/06, G01S 7/4865, G01S 7/487

(54) **DISTANCE MEASURING DEVICE**

(30) Priority: 22.09.2022 JP 2022150976
(71) Applicant: DENSO WAVE INCORPORATED, Agui-cho Chita-gun, Aichi 470-2297 (JP)
(72) Inventor: MITANI, Yusuke, Chita-gun, Aichi 470-2297 (JP)
(74) Representative: Kuhnen & Wacker Patent- und Rechtsanwaltsbüro PartG mbB
(86) International application number: PCT/JP2023/030186
(87) International publication number: WO 2024/062825

(57) **Abstract**

A distance measuring apparatus includes: a light projecting unit configured to project a light projection pulse; a light receiving unit including a predetermined number of light receiving elements and a signal processing unit, the predetermined number of light receiving elements being each configured to receive reflection light that is the light projection pulse reflected by an object; and a measuring unit configured to perform distance measurement on the basis of a time difference between a light projection timing of the light projection pulse and a light reception timing of the reflection light. The signal processing unit is configured to detect a fall timing at which a value of a response waveform generated depending on a number of light receiving elements responding to the reflection light among the predetermined number of light receiving elements becomes less than or equal to a threshold after exceeding the threshold. The measuring unit is configured to decide a timing earlier than the detected fall timing by a response time of the predetermined number of light receiving elements as the light reception timing. The response time is a setting value serving as a dead time of the predetermined number of light receiving elements or time based on the setting value.

## Description

### Technical Field

The present disclosure relates to a distance measuring apparatus.

### Background Art

A conventional apparatus irradiates a measurement target region with light and uses reflection light coming from an object in the measurement target region to measure the distance from the apparatus to the object. An example thereof includes an optical distance measuring apparatus that uses the time elapsed from the irradiation of light to the detection of reflection light, that is, the time of flight (TOF) of light which makes a round trip between the apparatus and the object.

For example, an optical distance measurement apparatus disclosed in PTL 1 below has been known as technology related to such an optical distance measuring apparatus. In this optical distance measurement apparatus, a plurality of silicon photo multipliers (SiPMs) is disposed in parallel in the vertical direction. The plurality of respective SiPMs is a TOF measurement photodetector and a noise measurement photodetector serving as photodetectors. A predetermined number of single photon avalanche diodes (SPADs) are disposed in an array in each of the plurality of SiPMs. In the TOF measurement photodetector, the time elapsed from laser light emission time is measured and a histogram (i.e., response waveform) for the measured time is generated in a case where the number of SPADs in a high state is greater than or equal to a predetermined number. In a case where the peak value of this histogram is greater than or equal to a predetermined threshold, the time corresponding to the peak position is output from a histogram circuit as TOF. At that time, a boundary level corresponding to a noise average value output from a detection circuit of the noise measurement photodetector is set as the predetermined threshold of the histogram circuit with reference to a noise average-threshold conversion table created in advance. The rate of the erroneous detection of signals of reflection light is hereby maintained at a predetermined value regardless of the level of noise.

### Citation List

### Patent Literature

PTL 1: JP 2020-134224 A

### Summary of the Invention

The presence of space-floating particulates in the measurement target region may, however, cause a distance measuring apparatus to have erroneous measurement. For example, in the apparatus disclosed in PTL 1, in a case where space-floating particulates such as fog are present in a measurement target region, reflection light that is irradiation light reflected by the space-floating particulates may be received by SPADs. In a case where the peak value of a response waveform generated on the basis of the reflection light is greater than or equal to a predetermined threshold, the time corresponding to the peak position is output as TOF. As a result, a distance that is different from the distance between the object in the measurement target region and the apparatus is measured.

The present disclosure has been devised to solve the problem described above. An object of the present disclosure is to provide a distance measuring apparatus that makes it possible to suppress the erroneous measurement of the distance from the distance measuring apparatus to an object even in a case where space-floating particulates are present in a measurement target region.

A distance measuring apparatus according to an embodiment of the present disclosure includes: a light projecting unit configured to project a light projection pulse to a measurement target region; a light receiving unit including a plurality of light receiving element groups and a signal processing unit, the plurality of light receiving element groups corresponding to respective pixels and each including a predetermined number of light receiving elements, the predetermined number of light receiving elements being each configured to receive reflection light that is the light projection pulse reflected by an object in the measurement target region; and a measuring unit configured to perform distance measurement for each of the pixels on a basis of a time difference between a light projection timing of the light projection pulse and a light reception timing of the reflection light. The signal processing unit is configured to detect, for each of the pixels, a fall timing at which a value of a response waveform generated depending on a number of light receiving elements responding to the reflection light among the predetermined number of light receiving elements becomes less than or equal to a threshold after exceeding the threshold. The measuring unit is configured to decide a timing earlier than the detected fall timing by a response time of the predetermined number of light receiving elements as the light reception timing. The response time is a setting value serving as a dead time of the predetermined number of light receiving elements or time based on the setting value.

In a case where a light projection pulse is projected to a measurement target region in which space-floating particulates such as fog and an object are present, the light projection pulse is reflected by the space-floating particulates immediately after the light projection, and the reflection light (also referred to as first reflection light below) is received by light receiving elements. Therefore, the response waveform rises immediately after the light projection. After that, the light projection pulse passing through the space-floating particulates is reflected by the object and the reflection light (also referred to as second reflection light below) is received by the light receiving elements. The light projection pulse does not pass through the object and no reflection light is thus generated in a place farther than the object. Therefore, the response waveform rises immediately after the light projection in response to the reception of the first reflection light, and then falls in response to the reception of the second reflection light. That is, the response waveform is influenced by the space-floating particulates when rising, but the response waveform is less influenced by the space-floating particulates when falling. Here, in a response waveform generated in response to the reception of reflection light coming from the object in a case where no space-floating particulates are present, the time difference between a rise timing at which the value of the response waveform exceeds a threshold and a fall timing at which the value of the response waveform becomes less than or equal to the threshold after the rise timing corresponds to the response time (i.e., a setting value serving as the dead time of a predetermined number of light receiving elements or time based on the setting value) of the light receiving elements. This is because the respective light receiving elements respond to the reflection light coming from the object substantially at the same time. Therefore, in an embodiment of the present disclosure, a timing estimated on the basis of the fall timing and the response time is decided as a light reception timing. That is, distance measurement is performed by using a fall timing that is less influenced by space-floating particulates. Thus, even in a case where space-floating particulates are present in a measurement target region, it is possible to suppress the erroneous measurement of the distance from the distance measuring apparatus to the object.

### Brief Description of the Drawings

[Fig. 1] Fig. 1 is a block diagram illustrating a schematic configuration of a distance measuring apparatus according to a first embodiment.
[Fig. 2] Fig. 2 is a diagram for describing distance measurement in a TOF measurement method.
[Fig. 3] Fig. 3 is a diagram for describing a change in a voltage applied to a SPAD made by using an active quenching circuit.
[Fig. 4A] Fig. 4A is a diagram for describing a response waveform generated depending on a number of response elements in a case where no space-floating particulate is present between the distance measuring apparatus and an object.
[Fig. 4B] Fig. 4B is a diagram for describing a response waveform generated depending on a number of response elements in a case where the space-floating particulate is present between the distance measuring apparatus and the object.
[Fig. 5] Fig. 5 is a flowchart exemplifying a flow of processing of the distance measuring apparatus according to the first embodiment.
[Fig. 6A] Fig. 6A is a diagram for describing a response waveform having a plurality of fall timings under an environment under which a concentration of space-floating particulates is lower than a concentration of space-floating particulates in Fig. 4B in a modification example of the first embodiment.
[Fig. 6B] Fig. 6B is a diagram for describing a response waveform having a plurality of fall timings under an environment under which the concentration of space-floating particulates is lower than the concentration of space-floating particulates in Fig. 6A in a modification example of the first embodiment.
[Fig. 7] Fig. 7 is a diagram for describing a change in a voltage applied to a SPAD made by using a passive quenching circuit included in a distance measuring apparatus according to a second embodiment.
[Fig. 8] Fig. 8 is a diagram for describing a response waveform generated in a case where no object is present in a measurement target region in which a space-floating particulate is present.
[Fig. 9] Fig. 9 is a flowchart exemplifying a flow of processing of a distance measuring apparatus according to a third embodiment.
[Fig. 10A] Fig. 10A is a diagram for describing an example in which a distance measuring apparatus according to a fourth embodiment linearly increases a supply electric current to be supplied to each of light projecting elements to project a light projection pulse.
[Fig. 10B] Fig. 10B is a diagram for describing an example in which a distance measuring apparatus according to a modification example of the fourth embodiment nonlinearly increases a supply electric current to be supplied to each of light projecting elements to project a light projection pulse.
[Fig. 11] Fig. 11 is a hardware configuration diagram for processing of a distance measuring apparatus according to an embodiment of the present disclosure.

### Description of the Embodiments

### <First Embodiment>

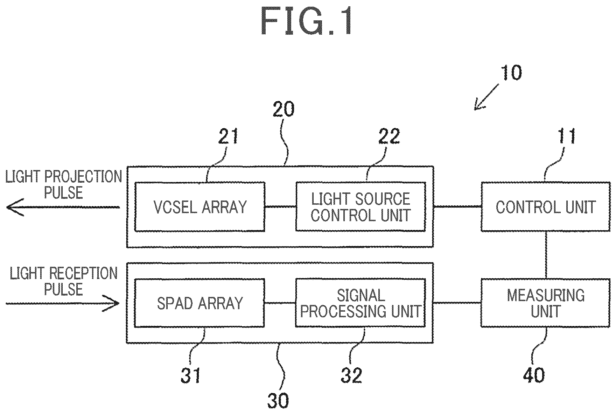

Hereinafter, a distance measuring apparatus according to a first embodiment of the present disclosure will be described with reference to the drawings. A distance measuring apparatus 10 according to the present embodiment measures the distance from the distance measuring apparatus 10 to an object in a measurement target region in a TOF measurement method. The distance measuring apparatus 10 is a measuring apparatus such as a light detection and ranging (LiDAR). As illustrated in Fig. 1, the distance measuring apparatus 10 includes a control unit 11, a light projecting unit 20, a light receiving unit 30, and a measuring unit 40. The control unit 11 controls an operation of the distance measuring apparatus 10. The light projecting unit 20 projects a light projection pulse to the measurement target region. The light receiving unit 30 receives reflection light that is the light projection pulse reflected by the object in the measurement target region. The measuring unit 40 measures the distance from the distance measuring apparatus 10 to the object in the measurement target region on the basis of a light reception pulse that is the reflection light received by the light receiving unit 30.

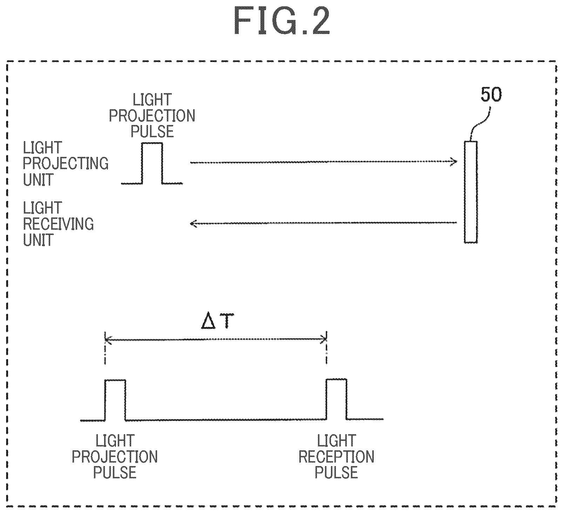

As illustrated in Fig. 2, the distance measuring apparatus 10 that adopts a TOF measurement method performs distance measurement in accordance with a time difference ΔT between the light projection timing of a light projection pulse and the light reception timing of a light reception pulse. The light projection timing is a timing at which the light projecting unit 20 projects a light projection pulse. The light reception timing is a timing at which the light receiving unit 30 receives, as a light reception pulse, reflection light that is a light projection pulse reflected by an object 50. Distance measurement is performed in units of pixels in the light receiving unit 30.

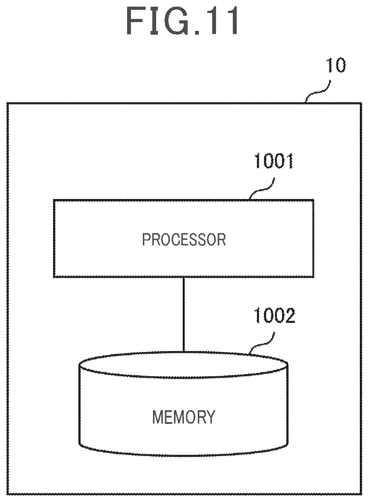

As illustrated in Fig. 11, the distance measuring apparatus 10 includes a processor 1001 and a memory 1002 as hardware components. For example, the distance measuring apparatus 10 may include a microcomputer. The microcomputer may include a central processing unit (CPU), a system bus, an input/output interface, a read only memory (ROM), a random-access memory (RAM), a non-volatile memory, and the like. The memory 1002 stores in advance programs regarding control over the light projecting unit 20 and the measuring unit 40 and a program regarding control processing that uses a measurement result made by the measuring unit 40. The hardware components may achieve the functions of the control unit 11 and the measuring unit 40.

The light projecting unit 20 includes a vertical cavity surface emitting laser (VCSEL) array 21 and a light source control unit 22 that controls each of the light projecting elements in the VCSEL array 21 in response to a light projection instruction from the control unit 11. The VCSEL array 21 includes a plurality of light projecting elements disposed in an array. The plurality of light projecting elements may be a plurality of vertical cavity surface emitting lasers. The VCSEL array 21 is controlled by the light source control unit 22 and the plurality of light projecting elements each project a square light projection pulse at a predetermined timing.

The light receiving unit 30 includes a SPAD array 31 and a signal processing unit 32 that processes an output signal from the SPAD array 31 and outputs the output signal to the measuring unit 40. A plurality of SPADs is disposed in an array in the SPAD array 31 as with the respective light projecting elements in the VCSEL array 21. Each of the SPADs is a light receiving element that has high response characteristics and allows for a smaller pixel size. In the SPAD array 31, a predetermined number of SPADs (e.g., 18 SPADs) are included in one pixel as a group (i.e., light receiving element group) of SPADs. That is, a plurality of SPAD groups is arranged in the SPAD array 31. Each of the SPADs receives, as a light reception pulse, reflection light that is a light projection pulse projected from the light projecting unit 20 and reflected by an object in a measurement target region.

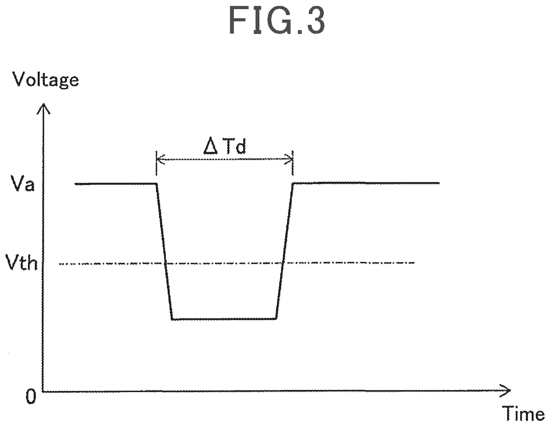

In addition, the light receiving unit 30 includes, for each of the SPADs, an active quenching circuit to restore the SPAD within a short time to a state in which the SPAD is able to respond to a light reception pulse (i.e., reflection light). As illustrated in Fig. 3, the active quenching circuit applies a voltage Va in reverse bias to each SPAD and forcibly recovers a voltage V applied to the SPAD that has decreased from the voltage Va in response to a breakdown phenomenon brought about by light reception up to the voltage Va a predetermined time after the breakdown even during light reception. The main difference between the active quenching circuit and a passive quenching circuit described below is the use of a transistor or the like that is an active element in the active quenching circuit instead of a quenching resistor that is a passive element. The active quenching circuit does not recover the voltage applied to each SPAD before a certain delay time passes after the occurrence of the breakdown, and forcibly recovers the applied voltage up to the voltage Va quickly immediately after the delay time passes. It is to be noted that a hybrid quenching circuit in which a transistor and a quenching resistor are both implemented may be used instead of the active quenching circuit. The active quenching circuit restores each SPAD within a setting value ΔTd of the constant dead time of the SPAD regardless of light projection pulse width (i.e., the time for which a light projection pulse is being projected) to a state in which the SPAD is able to respond. The setting value ΔTd of the dead time may be stored in the distance measuring apparatus 10 in advance. The state in which the SPAD is able to respond may be, for example, a state in which the applied voltage is the voltage Va. An example of such an active quenching circuit includes an active circuit. It is to be noted that the voltage Va in reverse bias may correspond to an example of a predetermined voltage value.

The signal processing unit 32 processes a signal output from each of the SPADs in response to the reception of a light reception pulse, and outputs information resulting from the processing to the measuring unit 40. Specifically, the signal processing unit 32 generates a response waveform (i.e., histogram) every sampling time. The response waveform corresponds to the number of SPADs (also referred to as the number of response elements below) responding to a light reception pulse among a predetermined number of SPADs included in one pixel. For example, the value of the response waveform is the total value of output values (e.g., binary signal of 0, 1) of the respective SPADs included in one pixel. The signal processing unit 32 calculates, for each of the pixels, information (also referred to as light reception timing information below) regarding a light reception timing used for TOF measurement from the generated response waveform, and outputs the calculated light reception timing information to the measuring unit 40. Hereinafter, the series of processing described above will also be referred to as a light reception timing information output processing.

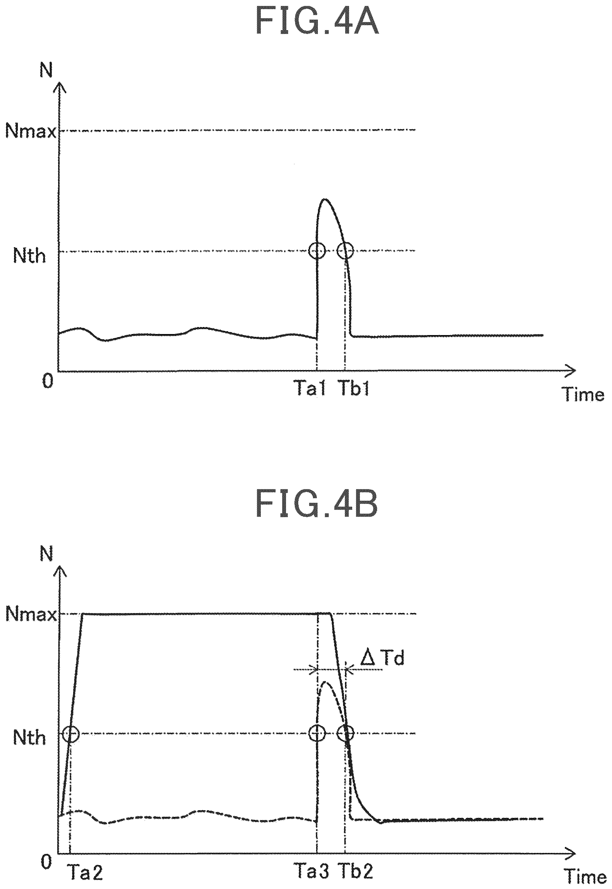

In the light reception timing information output processing according to the present embodiment, a response waveform corresponding to the number of SPADs (i.e., responding SPADs) (i.e., the number of response elements) a voltage applied to each of which is lower than or equal to a voltage threshold Vth illustrated in Fig. 3 after the projection of a light projection pulse is first generated for each of the pixels. For example, the SPADs each output 1 (i.e., high signal) when the applied voltage becomes lower than or equal to the voltage threshold Vth, and output 0 (i.e., low signal) when the applied voltage becomes higher than the voltage threshold Vth. The total of the output signals of the SPADs is the number of SPADs a voltage applied to each of which is lower than or equal to the voltage threshold Vth. A response waveform may be generated for each of the pixels at a timing (i.e., the response timing of the SPADs) at which the applied voltages each grow lower than or equal to the voltage threshold Vth. In a case where no space-floating particulates such as fog are present between the distance measuring apparatus 10 and the object 50, for example, a response waveform as exemplified in Fig. 4A is generated. A rise timing Ta1 at which the value of the response waveform exceeds a threshold (i.e., determination threshold) Nth and a fall timing Tb1 at which the value of the response waveform becomes less than or equal to the determination threshold Nth after the rise timing Ta1 are then detected for each of the pixels. The detected rise timing Ta1 and fall timing Tb1 are output to the measuring unit 40. In addition, in a case where space-floating particulates are present between the distance measuring apparatus 10 and the object 50, for example, a response waveform as exemplified in Fig. 4B is generated. A rise timing Ta2 at which the value of the response waveform exceeds the determination threshold Nth and a fall timing Tb2 at which the value of the response waveform becomes less than or equal to the determination threshold Nth after the rise timing Ta2 are then detected for each of the pixels. The setting value ΔTd of the dead time common to the respective SPADs is subtracted from the detected fall timing Tb2 to estimate a rise timing Ta3. The estimated rise timing Ta3 and the detected fall timing Tb2 are output to the measuring unit 40.

The reason why the rise timing Ta3 is estimated from the fall timing Tb2 as described above will be described below. Under an environment under which space-floating particulates such as fog, pollen, or PM2.5 (i.e., particulate matter) are present in a measurement target region, a light projection pulse is reflected by the space-floating particulates around the distance measuring apparatus 10 to generate reflection light immediately after the projection of the light projection pulse. The reflection includes continuous scattering by particulates. When the reflection light is received by the light receiving unit 30, the number of responding SPADs sharply increases and reaches a maximum value Nmax immediately after the light projection as exemplified in Fig. 4B. That is, the response waveform is saturated. This is because the reflection of the light projection pulse by the space-floating particulates near the distance measuring apparatus 10 causes reflection light to be received that is not attenuated so much immediately after the light projection. It is to be noted that the horizontal axis of each of Figs. 4A and 4B represents the time elapsed from the projection of a light projection pulse. In addition, Fig. 4B illustrates, by a dashed line, a response waveform (i.e., a response waveform corresponding to the response waveform exemplified in Fig. 4A) generated in a case where reflection light coming from the same object 50 is received under an environment under which no space-floating particulates are present in a measurement target region.

It is assumed here that the rise timing at which the value of the response waveform exceeds the determination threshold Nth is used as the light reception timing of reflection light coming from the object 50 to measure the distance to the object 50. However, in a case where space-floating particulates are present, the rise timing Ta2 caused by reflection light coming from the space-floating particulates is used for distance measurement. **In** other words, the rise timing of the response waveform is influenced by the space-floating particulates present in the measurement target region. As a result, since the rise timing Ta2 is earlier than the rise timing Ta3 caused by reflection light coming from the object 50, the distance from the distance measuring apparatus 10 to the object 50 is measured as being shorter than the actual distance.

Meanwhile, no reflection light is generated at a spot farther than the object 50 and the falling portion of the response waveform thus has a waveform chiefly corresponding to reflection light coming from the object 50. For example, as exemplified in Fig. 4B, the response waveform abruptly falls after rising and reaching the maximum value Nmax. In other words, the falling portion of the response waveform sharply decreases because no additional reflection light is generated. Furthermore, the decreasing speed corresponds to the distance to the object 50. In this way, the rise timing of the response waveform is influenced by the space-floating particulates, but the fall timing of the response waveform is less influenced by the space-floating particulates.

Furthermore, in a response waveform generated in response to the reception of reflection light coming from the object 50 in a case where no space-floating particulates are present, the time difference between the rise timing Ta1 at which the determination threshold Nth is exceeded and the fall timing Tb1 at which the response waveform becomes less than or equal to the determination threshold Nth after the rise timing Ta1 corresponds to the setting value ΔTd of the dead time of the SPADs. If described in detail, one pixel is small in size and the respective SPADs included in the one pixel thus receive and respond to reflection light substantially at the same time. The respective SPADs responding at the same time are estimated to be responding during the setting value ΔTd of the dead time. Furthermore, the response waveform is generated depending on the total value of output values (i.e., binary signals (0, 1)) of the respective SPAD elements included in one pixel. In other words, the response waveform is generated depending on the number of responding SPADs in one pixel. Therefore, a response start and a response end of the respective SPADs substantially correspond to rising and falling response waveforms. When the determination threshold Nth is set as the half value between the peak of the response waveform and the noise level, it is possible to regard the determination threshold Nth as the half width (Tb1 - Ta1) = the setting value ΔTd of the dead time of the response waveform. Additionally, depending on the value of the determination threshold Nth of the response waveform, this relational expression is not strictly established in some cases. The influence thereof is not, however, so great. In addition, the relational expression may be corrected depending on the level of the determination threshold Nth. For example, in a case where the determination threshold Nth is lower than the half value of the response waveform, Tb1 - Ta1 > ΔTd is established. In addition, if the determination threshold Nth is higher than the half value of the response waveform, Tb - Ta1 < ΔTd is established. The relational expression may be therefore established by multiplying the setting value ΔTd of the dead time by a predetermined coefficient corresponding to the level of the determination threshold Nth. This makes it possible to accurately estimate the rise timing of the response waveform for the determination threshold Nth that is not a half value. It is to be noted that the present embodiment adopts the dead time median of the respective SPADs as the setting value ΔTd of the dead time of the SPADs.

Therefore, the setting value ΔTd of the dead time of the SPADs is subtracted from the fall timing Tb2 to estimate the rise timing Ta3 under an environment under which space-floating particulates are present in a measurement target region (see Fig. 4B). The use of the estimated rise timing Ta3 as a light reception timing for distance measurement makes it possible to perform distance measurement by using the fall timing Tb1 that is not influenced by space-floating particulates.

The measuring unit 40 receives light reception timing information (i.e., the detected rise timing, the detected fall timing, and the estimated rise timing) calculated for each of the pixels as described above from the signal processing unit 32 of the light receiving unit 30. The measuring unit 40 receives, from the control unit 11, information (also referred to as light projection timing information below) regarding a light projection timing about which the control unit 11 instructs the light projecting unit 20. The light projection timing information indicates the light projection timing of a light projection pulse. The measuring unit 40 performs measurement processing of measuring the distance from the distance measuring apparatus 10 to an object in a measurement target region on the basis of the light reception timing information and the light projection timing information.

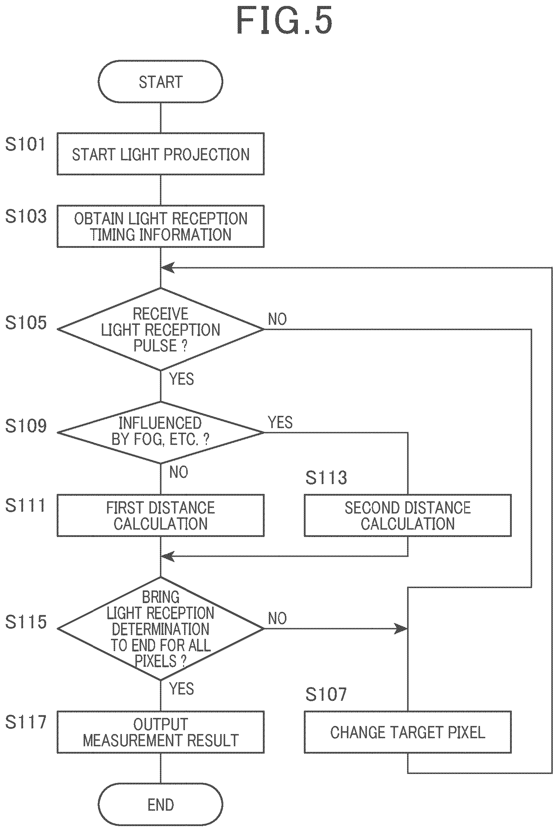

Hereinafter, processing of the distance measuring apparatus 10 will be described in the present embodiment in detail with reference to the flowchart illustrated in Fig. 5. When the processing of the distance measuring apparatus 10 is started, the VCSEL array 21 of the light projecting unit 20 enters a state in which the VCSEL array 21 is able to project light and the SPAD array 31 of the light receiving unit 30 enters a state in which the SPAD array 31 is able to receive light. A light projection pulse is then projected from the light projecting unit 20 in response to a light projection instruction of the control unit 11 (step S101).

Next, the measuring unit 40 obtains light reception timing information (step S103). For example, the signal processing unit 32 of the light receiving unit 30 performs light reception timing information output processing as described above. The light reception timing information (i.e., the detected rise timing, the detected fall timing Tb1, and the estimated rise timing) calculated for each of the pixels is obtained from the signal processing unit 32.

Subsequently, the measuring unit 40 determines for each of the pixels whether reflection light coming from the object 50 is received as a light reception pulse (step S105). Specifically, first, the first pixel is used as a target pixel and it is determined whether or not the target pixel receives a light reception pulse. In a case where the value of a response waveform generated for the target pixel does not exceed the determination threshold Nth described above, it is determined that the target pixel receives no light reception pulse (No in step S105) and the processing of step S107 is performed. In the processing of step S107, the target pixel is changed to the next pixel and the processing of step S105 is performed for the next pixel.

In a case where the value of a response waveform generated for the target pixel exceeds the determination threshold Nth described above, it is determined that the target pixel receives a light reception pulse (Yes in step S105) and the processing of step S109 is performed. In the processing of step S109, it is determined whether or not the detected rise timing is influenced by space-floating particulates.

Specifically, the measuring unit 40 determines whether the time difference between the estimated rise timing and the detected rise timing is greater than or equal to a time threshold. For example, in the example of Fig. 4A, the number of response elements does not sharply increase immediately after light projection. The time difference between the detected rise timing Ta1 and the estimated rise timing is therefore less than the time threshold. That is, it is determined that the detected rise timing Ta1 is not influenced by space-floating particulates (No in step S109).

In this way, in a case where it is determined that the detected rise timing is not influenced by space-floating particulates, first distance calculation processing is performed (step S111). Specifically, distance calculation processing in which the detected rise timing is used as a light reception timing is performed. For example, in the example of Fig. 4A, the distance from the distance measuring apparatus 10 to the object is calculated for a target pixel on the basis of the time difference ΔT between the detected rise timing Ta1 and the light projection timing indicated by the light projection timing information obtained from the control unit 11.

In contrast, in the example of Fig. 4B, as described above, the number of response elements sharply increases immediately after light projection under an environment under which space-floating particulates are present in a measurement target region, and the difference between the detected rise timing Ta2 and the estimated rise timing Ta3 is thus greater than or equal to the time threshold. That is, it is determined that the detected rise timing Ta1 is influenced by space-floating particulates (Yes in S109).

In this way, in a case where it is determined that it has been influenced by space-floating particulates, second distance calculation processing is performed (step S113). Specifically, distance calculation processing in which the estimated rise timing (i.e., the timing obtained by subtracting the setting value ΔTd of the dead time of the SPADs from the detected fall timing Tb2) is used as a light reception timing is performed. For example, in the example of Fig. 4B, the distance from the distance measuring apparatus 10 to the object is calculated for a target pixel on the basis of the time difference ΔT between the estimated rise timing Ta3 and the light projection timing indicated by the light projection timing information obtained from the control unit 11.

After the distance is calculated for the target pixel in step S111 or S113 described above, the processing of step S107 and the subsequent steps is performed in a case where the processing of step S105 is not performed for all the pixels (No in step S115). When the processing of step S105 is performed for all the pixels (Yes in S115), a measurement result is output (step S117). The measurement result is output to a higher-level device or the control unit 11. The control unit 11 causes a storage unit to store the measurement result. The processing comes to an end after step S1 17. It is to be noted that the processing of the flowchart of Fig. 5 is performed every sampling (i.e., light projection conducted one time).

As described above, in the distance measuring apparatus 10 according to the present embodiment, the signal processing unit 32 included in the light receiving unit 30 detects, for each of the pixels, a fall timing at which a response waveform generated depending on the number of SPADs (i.e., the number of response elements) responding to reflection light among a predetermined number of SPADs becomes less than or equal to the determination threshold Nth after exceeding the determination threshold Nth. The measuring unit 40 then performs distance measurement in a measurement target region on the basis of the time difference ΔT between the light projection timing of the light projecting unit 20 and the light reception timing obtained for each of the pixels in the light receiving unit 30. In a case where a rising response waveform is influenced by space-floating particulates such as fog, the measuring unit 40 decides, as the light reception timing, the timing obtained by subtracting the setting value ΔTd of the dead time of the SPADs from the fall timing detected by the signal processing unit 32.

In this way, in a case where it has been influenced by space-floating particulates, the distance measuring apparatus 10 subtracts the setting value ΔTd of the dead time of the SPADs from the fall timing to estimate the rise timing. The estimated rise timing is decided as a light reception timing to make it possible to perform distance measurement by using the fall timing that is less influenced by space-floating particulates. This makes it possible to accurately measure the distance from the distance measuring apparatus 10 to the object even under an environment under which space-floating particulates are present. It is to be noted that the setting value ΔTd of the dead time is an example of the response time of light receiving elements.

In addition, the signal processing unit 32 detects, for each of the pixels, the rise timing (i.e., the detected rise timing) at which the value of the response waveform exceeds the determination threshold Nth along with the fall timing. In a case where the time difference between the estimated rise timing (i.e., the timing obtained by subtracting the setting value ΔTd of the dead time of the SPADs from the fall timing) and the detected rise timing is greater than or equal to the time threshold (Yes in step S109), the measuring unit 40 decides the estimated rise timing as a light reception timing. In a case where the time difference between the estimated rise timing and the detected rise timing is less than the time threshold (No in step S109), the detected rise timing is decided as a light reception timing.

In a case where no space-floating particulates are present in a measurement target region, the time difference between the estimated rise timing and the detected rise timing is small. Meanwhile, in a case where space-floating particulates are present in a measurement target region, the time difference between the estimated rise timing and the detected rise timing is great. This makes it possible to determine whether space-floating particulates are present on the basis of the time difference. Furthermore, in a case where no space-floating particulates are present, distance measurement in which the detected rise timing is used as a light reception timing is higher in accuracy than distance measurement in which the estimated rise timing is used as a light reception timing. This is because the detected value is more accurate than the estimated value. In addition, a light projection pulse and a light reception pulse each rise more abruptly than when falling. The detected rise timing is therefore more accurate as a light reception timing than the rise timing estimated from the fall timing. The detected rise timing thus makes it possible to increase the distance measurement accuracy more than the estimated rise timing does.

The measuring unit 40 therefore determines that space-floating particulates are present and decides the estimated rise timing as a light reception timing in a case where the time difference is greater than or equal to the time threshold. In addition, the measuring unit 40 determines that no space-floating particulates are present and decides the detected rise timing as a light reception timing in a case where the time difference is less than the time threshold. This makes it possible to increase the accuracy of distance measurement by selecting the detected rise timing or the estimated rise timing as a light reception timing depending on the presence or absence of space-floating particulates.

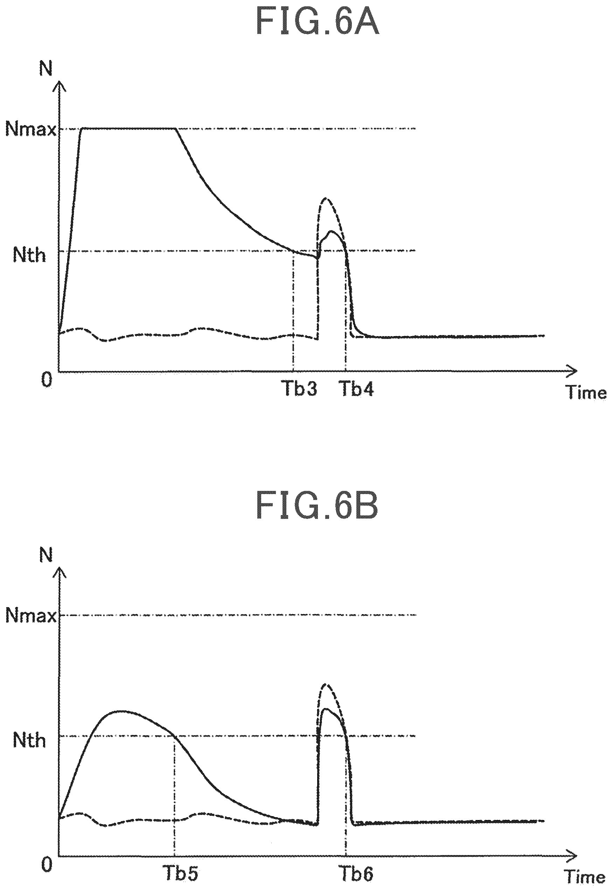

Additionally, as a modification example of the present embodiment, in a case where two or more fall timings are detected for one pixel under an environment under which space-floating particulates are present, a light reception timing may be decided on the basis of the latest fall timing. For example, the environment of Fig. 6A has a lower concentration of space-floating particulates than the concentration of the environment of Fig. 4B. Therefore, as exemplified in Fig. 6A, before a response waveform for reflection light coming from the object 50 is generated, the number of response elements becomes less than or equal to the determination threshold Nth. After that, the number of response elements becomes less than or equal to the determination threshold Nth again in the response waveform for the reflection light coming from the object 50. That is, there are two timings Tb3 and Tb4 at which the number of response elements becomes less than or equal to the determination threshold Nth. In addition, the environment of Fig. 6B has a further lower concentration of space-floating particulates than the concentration of the environment of Fig. 6A. However, Fig. 6B also has two timings Tb5 and Tb6 at which the number of response elements becomes less than or equal to the determination threshold Nth.

In this way, in a case where two or more fall timings are detected, a light reception timing is decided on the basis of the latest fall timing of the two or more fall timings. This is because a light projection pulse does not pass through the object 50, and no reflection light is thus generated at a spot farther than the object 50 and the latest fall timing corresponds to reflection light coming from the object 50. This makes it possible to use the fall timing corresponding to the reflection light coming from object 50 for distance measurement even if two or more fall timings are detected. As a result, it is possible to suppress erroneous measurement.

### <Second Embodiment>

Next, a distance measuring apparatus according to a second embodiment of the present disclosure will be described with reference to the drawings. The second embodiment is different from the first embodiment chiefly in that the light receiving unit 30 adopts a passive quenching circuit instead of an active quenching circuit in the second embodiment. Components substantially the same as the components of the first embodiment will be denoted by the same reference signs and description thereof will be omitted.

The distance measuring apparatus 10 according to the present embodiment adopts a passive quenching circuit in the light receiving unit 30 instead of the active quenching circuit described above as a circuit that restores each of the SPADs to a state in which the SPAD is able to respond. The passive quenching circuit is a simpler circuit than the active quenching circuit. The passive quenching circuit applies the voltage Va in reverse bias to each of the SPADs and gradually recovers the voltage applied to the SPAD that has decreased from the voltage Va in response to a breakdown phenomenon brought about by light reception up to the voltage Va by a quenching function attained by using a quenching resistor that is a passive element. The voltage applied to the SPAD is therefore recovered gradually immediately after the occurrence of a breakdown phenomenon brought about by light reception. However, in a case where a light reception pulse has high intensity, the probability of continuous breakdown phenomena is high even while the applied voltage is being recovered. That is, the voltage applied to the SPAD is not recovered in the period of light projection pulse width ΔTv (i.e., the time for which the light projection pulse is being projected) of the light projection pulse. After the light projection pulse falls (i.e., the light projection pulse is no longer received), the applied voltage starts to be recovered. The recovery of the applied voltage is then fully completed after the setting value ΔTd of the dead time passes from the start of the recovery.

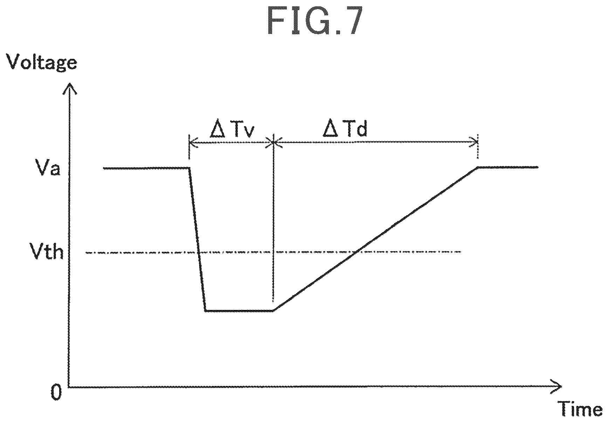

That is, as illustrated in Fig. 7, the applied voltage is not recovered in the passive quenching circuit while a light reception pulse is being received. After the light reception time (i.e., the time for which the light projection pulse is being projected: light projection pulse width ΔTv) of the light reception pulse passes, the SPADs are recovered in the period of the setting value ΔTd of the constant dead time of the SPADs to a state in which the SPADs are able to respond.

In other words, the recovery start timing of the applied voltage is delayed with an increase in the light projection pulse width ΔTv. The time necessary for recovery is regarded as the setting value ΔTd of the dead time and regarded to be constant. The time elapsed before each of the SPADs is restored to a state in which the SPAD is able to respond is therefore longer. That is, a timing at which an output value of each of the SPADs changes from 1 to 0 is delayed. As a result, the time difference between the estimated rise timing and the detected fall timing of a response waveform becomes longer depending on the light projection pulse width ΔTv.

Accordingly, in the present embodiment, the signal processing unit 32 subtracts the setting value ΔTd of the dead time of the SPADs and the light projection pulse width ΔTv from the fall timing to estimate the rise timing. This makes it possible to estimate the rise timing by taking into consideration delay in the recovery start timing of the applied voltage which is caused by the light projection pulse width ΔTv in the passive quenching circuit.

Therefore, in a case where it has been influenced by space-floating particulates, the rise timing estimated by taking the light projection pulse width ΔTv into consideration as described above is used to perform distance measurement in the processing of the distance measuring apparatus 10 according to the present embodiment. Specifically, the processing of the distance measuring apparatus 10 according to the present embodiment will be described with reference to Fig. 5. It is to be noted that only a difference from the first embodiment will be described. In step 103, the signal processing unit 32 subtracts the setting value ΔTd of the dead time of the SPADs and the light projection pulse width ΔTv from the detected fall timing to estimate the rise timing. The measuring unit 40 obtains light reception timing information including the estimated rise timing from the signal processing unit 32. In the second distance calculation processing of step S113, the measuring unit 40 calculates the distance from the distance measuring apparatus 10 to the object 50 for a target pixel on the basis of the time difference ΔT between the light reception timing that is the estimated rise timing and the light projection timing obtained from the control unit 11.

In this way, in the distance measuring apparatus 10 according to the present embodiment, the light receiving unit 30 includes a passive quenching circuit that starts to recover a voltage applied to each of a predetermined number of SPADs in response to the occurrence of a breakdown phenomenon brought about by light reception. The voltage applied to the SPAD that has decreased from the voltage Va in reverse bias in response to the breakdown phenomenon brought about by light reception is stopped by the passive quenching circuit from decreasing during the light reception. After light is no longer received, the applied voltage is recovered up to the voltage Va. The measuring unit 40 uses the estimated rise timing (i.e., the timing obtained by subtracting the setting value ΔTd of the dead time of the SPADs and the light projection pulse width ΔTv from the detected fall timing) obtained from the signal processing unit 32 as the light reception timing to calculate the distance.

As described above, in the light receiving unit 30 including a passive quenching circuit, the applied voltage is not recovered while reflection light of a light projection pulse is being received. In other words, the recovery start timing of the applied voltage is delayed with an increase in the light projection pulse width ΔTv. Therefore, the time difference between the estimated rise timing and the detected fall timing also becomes longer depending on the light projection pulse width ΔTv. Accordingly, the distance measuring apparatus 10 subtracts the setting value ΔTd of the dead time of the SPADs and the light projection pulse width ΔTv from the fall timing to estimate the rise timing. This makes it possible to estimate the rise timing by taking into consideration delay in the recovery start timing of the applied voltage which is caused by the light projection pulse width ΔTv in the passive quenching circuit. Thus, even in a case where a passive quenching circuit is adopted, it is possible to suppress the erroneous estimation of the rise timing caused by a deviation in the recovery start timing of the applied voltage. It is to be noted that the sum of the setting value ΔTd of the dead time and the light projection pulse width ΔTv is an example of the response time of light receiving elements.

### <Third Embodiment>

Next, a distance measuring apparatus according to a third embodiment of the present disclosure will be described with reference to the drawings. The third embodiment is different from the first embodiment chiefly in that distance measurement is not performed for a pixel for which the gradient of a response waveform before and after a fall timing is less than or equal to a predetermined gradient threshold in the third embodiment. Components substantially the same as the components of the first embodiment will be denoted by the same reference signs and description thereof will be omitted.

In a case where the object 50 is present in the light projection destination of a light projection pulse, a falling portion of a response waveform sharply decreases at a gradient corresponding to the distance from the distance measuring apparatus 10 to the object 50 as exemplified in Fig. 4B described above under an environment under which space-floating particulates are present. This is because the reflection of the light projection pulse comes to an end at the object 50 that does not transmit the light projection pulse. In addition, the light projection pulse and the reflection light are attenuated not only in accordance with the law of inverse square of the distance, but also by passing through the space-floating particulates. After the reflection light coming from the object 50 is received, the SPADs do not newly respond. Therefore, the time necessary for the response waveform to fall from the peak (e.g., maximum value Nmax) to the value (e.g., noise level) before light reception is approximately the setting value ΔTd of the dead time of the SPADs. That is, if the response waveform falls before the setting value ΔTd of the dead time passes from the start of a drop from the maximum value Nmax, it is possible to determine that the object 50 is present in the light projection destination of the light projection pulse.

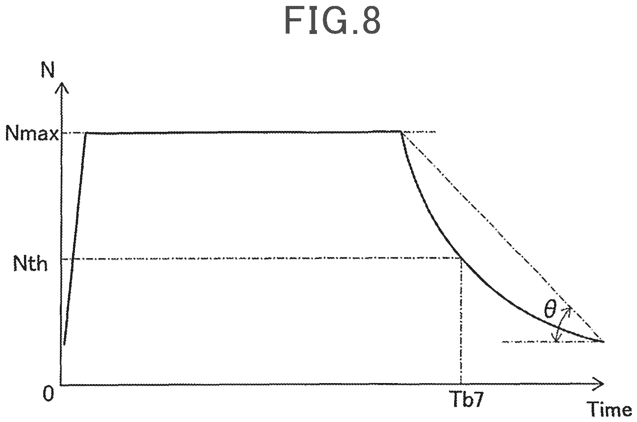

Meanwhile, in a case where the object 50 is not present in the light projection destination of the light projection pulse, the response waveform gradually falls from the maximum value Nmax as exemplified in Fig. 8. This is because the light projection pulse and the reflection light are attenuated in accordance with the law of inverse square of the distance and attenuated by passing through the space-floating particulates. Meanwhile, reflection light is generated whenever the light projection pulse passes through the space-floating particulates.

That is, under an environment under which space-floating particulates are present, the gradient of a response waveform before and after a fall timing in a case where the object 50 is not present in the light projection destination of a light projection pulse is less than the gradient of a response waveform before and after a fall timing in a case where the object 50 is present. The gradient of the response waveform may be the gradient of a line segment connecting, for example, a point on the response waveform at a timing before a fall timing in a section after the peak (e.g., maximum value Nmax) of the response waveform and a point on the response waveform at a timing after the fall timing in the section.

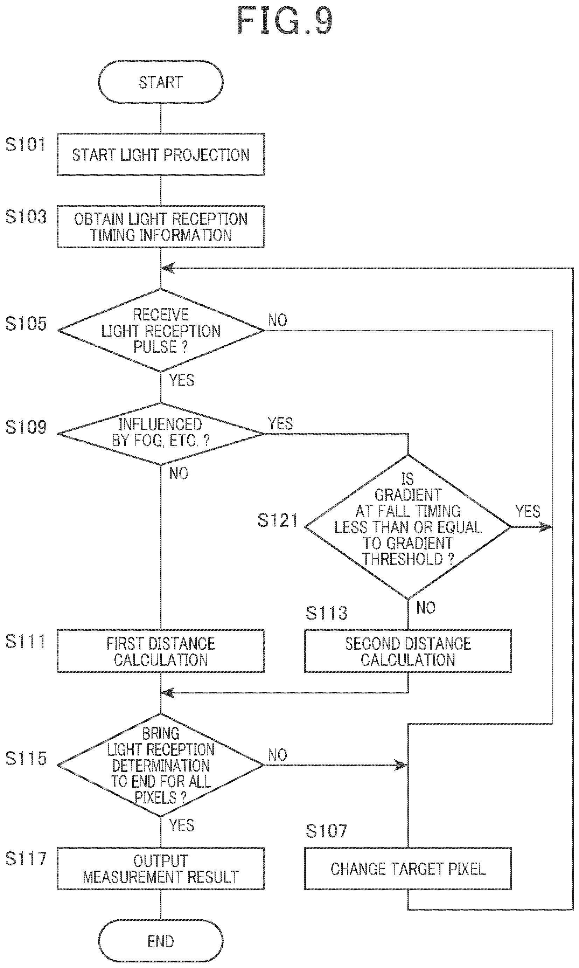

The processing of the distance measuring apparatus 10 according to the present embodiment will be described with reference to Fig. 9. The difference between Fig. 5 and Fig. 9 is step S121. In Fig. 9, when it is determined that the detected rise timing is influenced by space-floating particulates (Yes in step S109), the processing of step S121 is performed. In step S121, it is determined whether the gradient of the response waveform before and after the fall timing is less than or equal to the gradient threshold. For example, it is determined whether a gradient θ of the response waveform corresponding to the time from the maximum value Nmax before a fall timing Tb7 to falling completion (e.g., a decrease in the noise level) after the fall timing Tb7 as illustrated in Fig. 8 is less than or equal to the gradient threshold corresponding to the setting value ΔTd of the dead time of the SPADs.

In a case where the gradient of the response waveform before and after the fall timing is less than or equal to the gradient threshold (Yes in step S121), it is estimated that the object 50 is not present in the light projection destination of the light projection pulse. The measuring unit 40 does not therefore perform distance measurement for a target pixel. This makes it possible to prevent distance measurement from being performed on the object 50 that is not present.

It is to be noted that the example has been described in the present embodiment in which the gradient of a response waveform before and after a fall timing is the gradient of a response waveform corresponding to the time from the maximum value Nmax to the falling completion of the response waveform. However, for example, the gradient of the response waveform before and after the fall timing may be the gradient of a response waveform corresponding to the difference between the number of response elements (i.e., the value of the response waveform) a predetermined time before the fall timing and the number of response elements a predetermined time after the fall timing.

In this way, the measuring unit 40 does not perform distance measurement for a pixel for which the gradient of the response waveform in the section including the fall timing and following the peak of the response waveform is less than or equal to the gradient threshold.

In a case where the object 50 is present in the light projection destination of a light projection pulse, the response waveform abruptly falls under an environment under which space-floating particulates are present. Meanwhile, in a case where the object 50 is not present in the light projection destination of a light projection pulse, the response waveform gradually falls. Accordingly, the measuring unit 40 does not perform distance measurement for a target pixel because it is estimated that the object 50 is not present in the light projection destination of the light projection pulse in a case where the gradient of the response waveform is less than or equal to the gradient threshold. This makes it possible to prevent distance measurement from being performed on the object 50 that is not present. In other words, it is possible to suppress erroneous measurement caused by space-floating particulates.

### <Fourth Embodiment>

Next, a distance measuring apparatus according to a fourth embodiment of the present disclosure will be described with reference to the drawings. The fourth embodiment is different from the first embodiment chiefly in that a light projection pulse is projected such that the light amount gradually increases in the fourth embodiment. Components substantially the same as the components of the first embodiment will be denoted by the same reference signs and description thereof will be omitted.

In an active quenching circuit that recovers an applied voltage even during light reception, each of the SPADs is restored within a shorter time than in a passive quenching circuit to a state in which the SPAD is able to respond to reflection light. Here, a high concentration of space-floating particulates causes reflection light coming from the space-floating particulates to have higher intensity. In this case, an oscillation phenomenon may occur in which almost all the SPADs repeatedly exhibit response in which applied voltages fall below the voltage threshold Vth from the voltage Va.

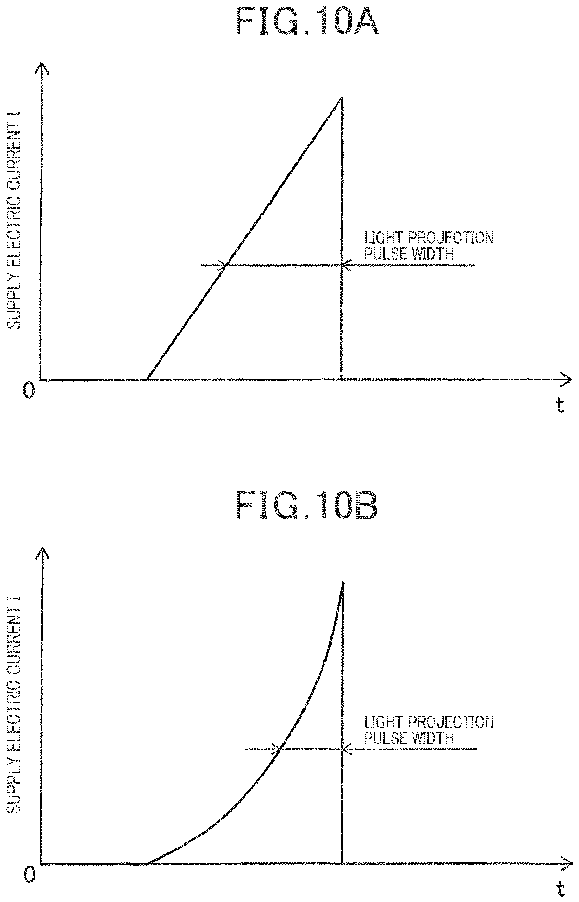

Therefore, in the present embodiment, the light projecting unit 20 projects a light projection pulse the light amount of which gradually increases. Specifically, for example, as exemplified in Fig. 10A, the light projecting unit 20 increases a supply electric current I to be supplied to each of the light projecting elements in a gentle straight line (in other words, linearly) when emitting a light projection pulse. Subsequently, the light projecting unit 20 abruptly decreases the supply electric current I a specified time after the start of the light projection. This allows the light projecting unit 20 to project a light projection pulse the light amount of which sharply decreases after gradually increasing.

In this way, the projection of a light projection pulse the light amount of which gradually increases makes it possible to distribute timings at which applied voltages fall below the voltage threshold Vth in the respective SPADs in comparison with the projection of a square light projection pulse. When the light amount of a light projection pulse is small, the occurrence ratio of response is low. It is thus only some of a predetermined number of SPADs that respond. When the light amount of a light projection pulse becomes larger, the occurrence ratio of response increases. Thus, the SPADs that have not responded also start to respond. That is, the response timings of the respective SPADs are distributed. In a case where the light reception period of the light projection pulse comes to an end before a SPAD having a delayed response timing returns to a state in which the SPAD is able to respond, the SPAD does not newly respond. That is, the SPAD does not undergo an oscillation phenomenon. In this way, it is possible to reduce the number of SPADs that each undergo the oscillation phenomenon described above.

It is to be noted that the example has been described above in which the light projecting unit 20 increases the supply electric current I in a gentle straight line and projects a light projection pulse the light amount of which gradually increases. However, for example, as exemplified in Fig. 10B, the light projecting unit 20 may increase the supply electric current I in a gentle curve (in other words, nonlinearly) and project a light projection pulse the light amount of which gradually increases.

In this way, the light receiving unit 30 includes an active quenching circuit that recovers an applied voltage up to the voltage Va a predetermined time after the occurrence of a breakdown phenomenon brought about by light reception. The light projecting unit 20 increases the light amount of the light projection pulse over time when the light projection pulse is projected.

In the active quenching circuit, each of the SPADs is restored within a shorter time than in a passive quenching circuit to a state in which the SPAD is able to respond to reflection light. Here, a high concentration of space-floating particulates causes more intense reflection light to be received from the space-floating particulates in a short distance. In this case, an oscillation phenomenon may occur in which almost all the SPADs repeatedly exhibit response in which applied voltages fall below the voltage threshold Vth. In contrast, the light amount of a light projection pulse is increased over time to distribute the response timings of the respective SPADs in comparison with the light amount of the light projection pulse increased at one time (i.e., the projection of a square light projection pulse). It is therefore possible to reduce the number of SPADs that each undergo the oscillation phenomenon as described above.

It is to be noted that the present disclosure is not limited to the respective embodiments and the like. For example, an embodiment as follows may be adopted. (1) The light projecting unit 20 of the distance measuring apparatus 10 is a close-range (e.g., a measurement range of about 20 m) SPAD-LiDAR and the measurement direction rotates every sampling at a predetermined angle. However, the distance measuring apparatus 10 may be another type of distance measuring apparatus that adopts a TOF measurement method.

(2) The distance measuring apparatus 10 measures the distance from the distance measuring apparatus 10 to an object in a measurement target region. The measurement target region may be a fixed region or a variable region. For example, the distance measuring apparatus 10 may be installed in a mobile object and the measurement target region may vary depending on the movement of the mobile object.

(3) The example has been described in each of the embodiments in which the signal processing unit 32 estimates a rise timing, but the measuring unit 40 may be estimate a rise timing.

## Claims

1. A distance measuring apparatus comprising:
a light projecting unit configured to project a light projection pulse to a measurement target region;
a light receiving unit including a plurality of light receiving element groups and a signal processing unit, the plurality of light receiving element groups corresponding to respective pixels and each including a predetermined number of light receiving elements, the predetermined number of light receiving elements being each configured to receive reflection light that is the light projection pulse reflected by an object in the measurement target region; and
a measuring unit configured to perform distance measurement for each of the pixels on a basis of a time difference between a light projection timing of the light projection pulse and a light reception timing of the reflection light, wherein
the signal processing unit is configured to detect, for each of the pixels, a fall timing at which a value of a response waveform generated depending on a number of light receiving elements responding to the reflection light among the predetermined number of light receiving elements becomes less than or equal to a threshold after exceeding the threshold,
the measuring unit is configured to decide a timing earlier than the detected fall timing by a response time of the predetermined number of light receiving elements as the light reception timing, and
the response time is a setting value serving as a dead time of the predetermined number of light receiving elements or time based on the setting value.

2. The distance measuring apparatus according to claim 1, wherein
the predetermined number of light receiving elements are a predetermined number of single photon avalanche diodes (SPADs),
the light receiving unit includes a passive quenching circuit configured to start to recover a voltage applied to each of the predetermined number of SPADs in response to occurrence of a breakdown phenomenon brought about by light reception, and
the response time is a sum of a pulse width of the light projection pulse and the setting value serving as the dead time of the predetermined number of SPADs.

3. The distance measuring apparatus according to claim 1, wherein, in a case where the two or more fall timings are detected for each of the pixels, the measuring unit is configured to decide the light reception timing on a basis of the latest fall timing.

4. The distance measuring apparatus according to claim 1, wherein
the signal processing unit is further configured to detect, for each of the pixels, a rise timing at which the value of the response waveform exceeds the threshold, and
the measuring unit is configured to, in a case where a time difference between the timing earlier than the fall timing by the response time and the rise timing is greater than or equal to a predetermined time threshold, decide the timing earlier than the fall timing by the response time as the light reception timing and configured to, in a case where the time difference between the timing earlier than the fall timing by the response time and the rise timing is less than the predetermined time threshold, decide the rise timing as the light reception timing.

5. The distance measuring apparatus according to claim 1, wherein the measuring unit is configured to refrain from performing the distance measurement for a pixel for which a gradient of the response waveform in a section including the fall timing and following a peak of the response waveform is less than or equal to a gradient threshold.

6. The distance measuring apparatus according to claim 1, wherein
the predetermined number of light receiving elements are a predetermined number of single photon avalanche diodes (SPADs),
the light receiving unit includes an active quenching circuit configured to recover an applied voltage up to a predetermined value a predetermined time after occurrence of a breakdown phenomenon brought about by light reception, and
the response time is the setting value serving as the dead time of the predetermined number of SPADs.

7. The distance measuring apparatus according to claim 6, wherein the light projecting unit is configured to increase a light amount of the light projection pulse over time when the light projection pulse is projected.
